# EUROPEAN PATENT SPECIFICATION

(11) **EP 2 807 399 B1**
(45) Date of publication and mention of the grant of the patent: **07.10.2015**
(21) Application number: 12775512.2
(22) Date of filing: 24.10.2012
(51) Int. Cl.: F16G 11/02, B65H 69/06, C25D 3/60, F16G 11/00

(54) **CHINESE FINGER ATTACHED TO STEEL CORD WITH SOLDER**
MITTELS EINES LÖTMITTELS AN EINEM STAHLSEIL BEFESTIGTER SEILSTRUMPF
CHAUSSETTE DE TIRAGE FIXÉE À UN CÂBLE D'ACIER PAR UNE BRASURE

(30) Priority: 26.01.2012 EP 12152653
(43) Date of publication of application: 03.12.2014
(73) Proprietor: NV Bekaert SA, 8550 Zwevegem (BE)
(72) Inventor: WOSTYN, Steven, B-8792 Desselgem (BE)
(74) Representative: Messely, Marc
(86) International application number: PCT/EP2012/071026
(87) International publication number: WO 2013/110361

(56) References cited:
- DE-A1- 3 941 675
- GB-A- 159 762
- JP-A- 2005 153 007
- US-A- 2 596 513
- US-A- 3 846 258
- US-A- 5 583 319

## Description

### Technical Field

The invention relates to a tubular fabric for connecting two steel cords, and an assembly of two steel cords and a tubular fabric for connecting said steel cords at two non-overlapping connecting ends, and further the two ends of the tubular fabric are connected to the steel cords by means of a solder. The invention further relates to a method of connecting two steel cords at two non-overlapping connecting ends to a tubular fabric by means of a solder.

### Background Art

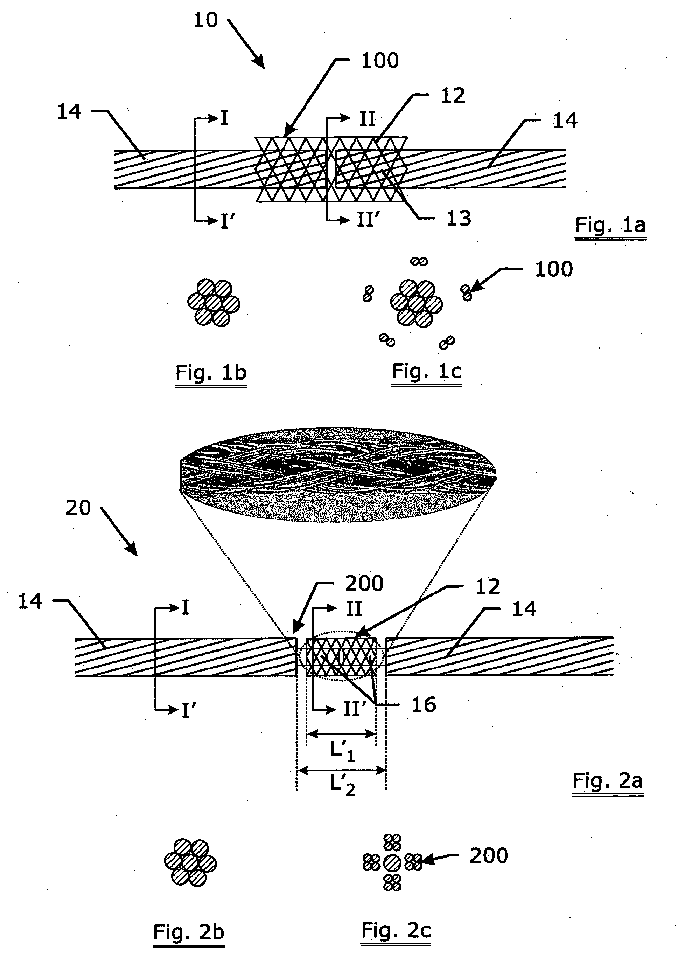

A tubular fabric for connecting two steel cords is for instance known in the art and is sometimes referred to as a "Chinese finger". This prior art tubular fabric 10 for connecting two steel cords is shown in Figure 1. It is composed of metal threads or wires 12 helically interwoven or braided to form a cylindrical braiding. Between adjacent successive threads 12 in the axial direction and in the peripheral direction, are spaces 13. The resulting network of lozenges is very flexible and facilitates radial expansion and contraction of the tubular fabric when it is positioned on the ends of two steel cords and contraction and gripping of those ends when the joined cords are subjected to forces tending to pull the cords from one another. The general purpose is to use such a tubular fabric or Chinese finger to connect two steel cords each time there is a fracture during twisting.

GB 1462 735 disclosed a tubular fabric which was similar to that shown in Figure 1 except that the braiding formed by the metal threads or wires were embedded in a rubber cylindrical body. This cylindrical body naturally filled the spaces between the metal threads or wires. Because the elastomeric body can be bonded to the cords to be connected, such an assembly gives a considerably improved join between the tubular fabric and the two ends of the cords.

Besides, an assembly of two steel cords connected by a tubular fabric then further connecting the steel cords at two connecting ends by means of a resin is also known. However, in case it is desirable to have continuous cords available by such assemblies, the tensile strength at the joint part is rather poor as the thickness of the resin might not be easily controlled, which may cause a weak bonding between the two ends of the cords. Even in case the resin is used between the two ends of the tubular fabric to the exterior filaments of the steel cords; the tensile strength at the connection part is also unsatisfied.

Further, an assembly of axially abutting ends connected by a Chinese finger by soldering was disclosed in US 5583 319. It described a low resistance splice for superconductor cables, at least two rope-like cables, each made up of plural subcables, ends of said subcables positioned in close, and then a Chinese finger surrounding said overlapping spliced ends in pressure contact with said ends. Further said subcables and surrounding Chinese fingers positioned in channels in a body and sufficient solder applied over said Chinese fingers and ends to maintain said Chinese finger in contact with said ends and further hold the assemblies in the channels and provide a higher degree of mechanical strength.

### Disclosure of Invention

The primary object of the invention is to mitigate drawbacks of the prior arts.

The further object of the invention is to provide an improved joint between the tubular fabric and the ends of the cords.

Another object of the invention is to increase tensile strength on rubber embedded cords of such assemblies.

According a first aspect of the invention, there is provided an assembly of two steel cords and a tubular fabric for connecting the steel cords, and the tubular fabric positioned so that it at least partially overlaps with the two non-overlapping steel cords, further only the two ends of the tubular fabric are connected to the exterior filaments of the steel cords by means of a solder.

Preferably, the solder comprises any metal with a melting point lower than that of steel, e.g. brass or tin.

More preferably, the solder comprises tin-lead alloys.

In a particular embodiment, the tin-lead alloys comprises a composition of 60% Sn and 40% Pb, all percentages being percentages by weight.

In another particular embodiment, the tin-lead alloys comprises a composition of 63% Sn and 37% Pb by weight.

Alternatively, the solder comprises a lead free solder type.

Preferably, the lead free solder may comprise a composition of tin, copper, silver, bismuth, indium, zinc, antimony.

In the assembly of the invention, only the two ends of the tubular fabric are soldered to the exterior filaments of the steel cords in order to obtain a sufficiently high tensile strength of the joint part and allow proper tensioning of the assembly. A solder has proven to provide a stronger bonding than an adhesive resin. Moreover, a solder is to be preferred above a weld, since welding may make the assembly too brittle.

Before soldering the Chinese finger to the two steel cord ends, the filaments of each connecting end may be heated and over-twisted together. This is done to avoid contact stresses between cord ends and the Chinese finger, leading to an improved breaking load of the assembly.

According a second aspect of this invention, a method of connecting two steel cords at two non-overlapping connecting ends by means of a tubular fabric is provided. The method comprises the steps:
- connecting the two non-overlapping connecting ends by means of a tubular fabric;
- soldering only the two ends of the tubular fabric to exterior filaments of the steel cords.

According a third aspect of this invention, a method of connecting two steel cords at two non-overlapping connecting ends by means of a tubular fabric is provided, the method comprises the steps:
- connecting the two non-overlapping connecting ends by means of a tubular fabric;
- soldering only the two ends of tubular fabric to the exterior filaments of the steel cords resulting in a connected assembly;
- wrapping the connected assembly by means of a wrapping filament thereby avoiding to wrap on top of the tubular fabric.

According to the present invention, it is not necessary for the assembly positioned in channels in a body and further hold the assemblies in the channels as described in the previous prior art US 5583 319. It is an easy way to obtain a sufficiently high tensile strength of the joint part only by soldering the two ends of the tubular fabric to the exterior filaments of the steel cords according to the invention.

### Brief Description of Figures in the Drawings

Figure 1 a is an axial section of a known assembly of two steel cords connecting by a known connector tubular fabric according to the prior art.
Figure 1b is a cross-section according to plane I-I in Figure 1 a.
Figure 1c is a cross-section according to plane II-II in Figure 1 a.
Figure 2a shows an axial section of a preferred embodiment of the invention.
Figure 2b is a cross-section according to plane I-I in Figure 2a.
Figure 2c is a cross-section according to plane II-II in Figure 2a.
Figure 3a shows an axial section of another preferred embodiment of the invention.
Figure 3b is a cross-section according to plane I-I in Figure 3a.
Figure 3c is a cross-section according to plane II-II in Figure 3a.

### Mode(s) for Carrying Out the Invention

Fractures of a steel cord may happen during the twisting process. However, it is desirable to have continuous cords with long lengths available so as to obtain uniform continuous reinforcing elements. Having long lengths without too much loss of breaking load at the level of the fracture avoids difficulties during the rubberising of the cords. Especially for the joint part, which is the part where two steel cords are joined together, it is desirable to have a strong connection as well as an equal diameter or a minimized change in diameter.

The known assembly shown in Figure 1 a is composed of two steel cords 14 connected by a known connector tubular fabric 10. The diameter (a radial thickness) of the assembly over the length of the tubular fabric is equal to the sum of diameter of the steel cord itself and the radial thickness of the tubular fabric. So there is a substantial increase in diameter as can be noticed from a comparison of Figure 1b with Figure 1 c.. Besides, as there is nothing between the two ends of the tubular fabric and the exterior filaments of the steel cords, the tensile strength of the joint part is quite insufficient despite the compressive force exercised by the tubular fabric. That means the connection between the two ends of the cords is rather poor.

A solder has proven to provide a stronger bonding than an adhesive resin between the tubular fabric and the exterior filaments of the steel cords. Moreover, a solder is to be preferred above a weld, since welding may make the assembly too brittle.

Different embodiments of the connector tubular fabric or the Chinese finger may be provided. Two examples are as follows: one with sixteen filaments with a diameter of 0.11 mm illustrated as the tubular fabric 100 and one with thirty-two filaments with a diameter of 0.09 mm illustrated as the tubular fabric 200. The tensile strength of the filaments of the two Chinese fingers is preferred to ultra tensile strength, which means a tensile strength above 3800 MPa.

A first preferred embodiment 20 according to the invention and shown in Figure 2a is similar to that shown in Figure 1 except that at the two non-overlapping connecting ends 16 of the steel cords 14 the six filaments of the outer layer are absent over a total length L₂'. This means that the tubular fabric 100 with a particular length L₁' when positioned and fitting within the total length L₂' of one core filament does not increase the diameter, at least not over the length L2.

Removal of the outer layer filaments at the two non-overlapping connecting ends of the two steel cords is done manually and with appropriate cutting means, e.g. by means of a pair of pliers. Thereafter, the cord ends are heated and twisted to avoid contact stresses between cord and Chinese finger. Further, in order to avoid the filaments at the cutting point becoming loose, they are connected to the rest of the steel cord by means of a solder. According to the invention, the solder may comprise tin-lead alloys, e.g. tin-lead alloys comprises a composition of 60% Sn and 40% Pb by weight.

After that, the two ends of tubular fabric are soldered to the exterior filaments of the steel cords in order to increase tensile strength at level of fracture. The solder material here is the same as that used for connecting the rest of the steel cord above. If the two ends of tubular fabric are not soldered to the exterior filaments of the steel cords, the connection of the two ends of the steel cords is bad, which will cause slippage between cord and Chinese finger during tensioning of the cord and so lead to early fractures. It may also cause too big a loss of tensile strength at level of fracture.

In order to further increase the strength of the joint between the steel cords, one may leave the steel cords as they are, i.e. without removing the outer layer filaments. Of course, this embodiment has the drawback of an increased diameter at the level of the joint.

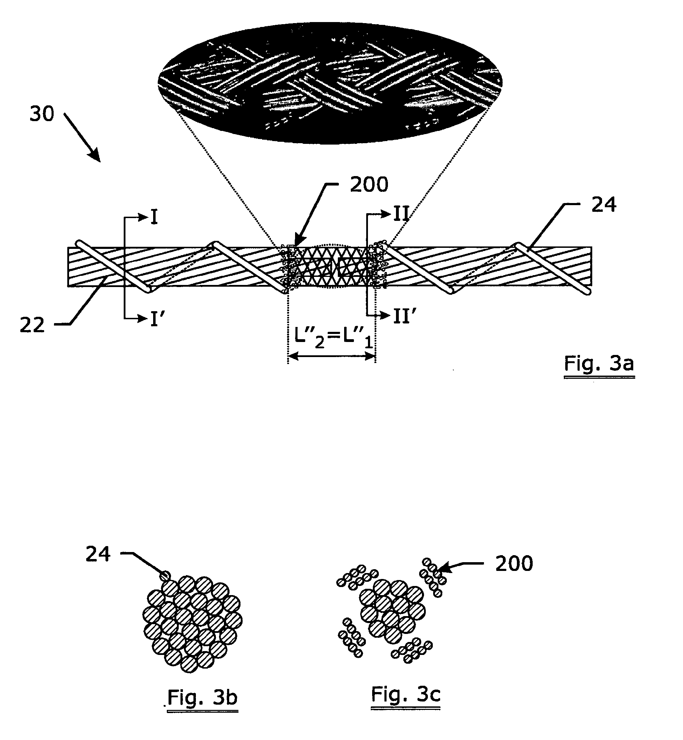

In case the customer wants a steel cord with a wrapping filament 24, e.g. a steel cord 22 with a construction of 3+9+15 +1, a second preferred embodiment 30 shown in Figure 3a illustrates the assembly according to the invention.

At the two non-overlapping connecting ends of the steel cord 22 the fifteen filaments of the outer layer are absent over a total length L₂". The tubular fabric 200 with a particular length L₁" is positioned and just fits with the total length L₂". The result is that the diameter of the assembly over the length L₂" decreases significantly compared with the known assembly shown in Figure 1 a.

Removal of the outer layer filaments at the two non-overlapping connecting ends of the two steel cords is also done manually and with appropriate cutting means, e.g. by means of a pair of pliers. Then the remaining filaments at the two connecting ends of the steel cord - the three core filaments and the inner layer nine filaments - are heated and over twisted in order to obtain a thinner radial diameter of the ends further to contribute to the diameter decreasing of the assembly over the length L₂".

Further, in order to avoid the filaments (the fifteen outer layer filaments) at the cutting point becoming loose, they are connected to the rest of the steel cord by means of solder. Such a solder may be a lead free solder type, which might comprise a composition of tin, copper, silver, bismuth, indium, zinc, antimony. The lead free solders have the advantage of absence of lead, i.e. be more environment friendly.

After that, the two ends of tubular fabric are soldered to the exterior filaments of the steel cords in order to increase tensile strength at level of fracture. Such a solder may be a solder comprises tin-lead alloys or a lead free solder type.

Then a wrapping filament 24 is wrapping the steel cord 22 but no wrapping on top of the tubular fabric is done in order to avoid the diameter increasing of the joint part of the assembly.
Alternatively, wrapping may be done over the assembly and the tubular fabric. The drawback is that this increases the diameter, but the advantage is that this continuous wrapping without interruptions strengthens the assembly.

Various embodiments have been tested on breaking load and fatigue resistance. The various embodiments are numbered as:
0 = steel cord 3x0.24 + 9x0.225 + 0.15 HT (HT = high-tensile) without any fractures
1 = two steel cords 0 connected by means of a weld
2 = Chinese finger CF16 with 16 steel filaments of 0.11 mm UT (UT = ultra-tensile)
3 = assembly of steel cords 0 with burn off ends and CF16 and solder
4 = assembly of extruded steel cords 0 with burn off ends and CF16
5 = assembly of extruded steel cords 0 with burn off ends and CF16 and additional rubber after vulcanization
6 = assembly of steel cords 0 with heated and twisted ends and CF16 and solder
7 = assembly of steel cords 0 with heated and twisted ends and 1 cm space between ends and CF16 and solder
8 = assembly of steel cords 0 with weld after hammering and CF16 and solder
9 = assembly of steel cords 0 with weld and CF16 and solder
10 = assembly of steel cords 0 with heated and twisted ends and CF32 and solder
11 = assembly of steel cords 0 with sharp ends and CF32 and solder
12 = assembly of steel cords 0 with weld after hammering and CF32 and solder
13 = assembly of steel cords 0 with weld and CF32 and solder CF32 = Chinese finger with 32 steel filaments of 0.09 mm UT

**Table**

| | Breaking load (N) | RV - 20 mm pulley (# of cycles) | RV - 50 mm pulley (# of cycles) |
|---|---|---|---|
| 0 | 1530 | 93542.0 | 1000000.0 |
| 1 | 751 | - | 9452.8 |
| 2 | 504 | - | 191634.0 |
| 3 | 263 | 3259.8 | 9630.0 |
| 4 | 284 | 125.0 | 31700.0 |
| 5 | 319 | 6583.5 | - |
| 6 | 328 | 3203.8 | 21352.0 |
| 7 | 305 | - | 13867.0 |
| 8 | 773 | - | 21744.0 |
| 9 | 808 | - | 24977.0 |
| 10 | 454 | 8289.0 | 1000000.0 |
| 11 | 497 | - | - |
| 12 | 603 | - | - |
| 13 | 854 | - | 14490.0 |

| | | | |
|---|---|---|---|
| The decimal figure in the number of cycles is a consequence of the fact that an average is taken over several test runs. | | | |

With respect to the tensile test, the best result for connection with CF16 is a cord with heated and twisted ends and CF16 and with solder.
Still with respect to the tensile test, the best result for connection with CF32 is a cord with sharp ends and CF32 and solder.

With respect to fatigue resistance and looking at the results for the 20 mm pulley test, the best performance was obtained by the cord with heated and twisted ends and CF32 and solder.

It is to be understood that the invention is not limited to the assemblies of the embodiments above, but that it may also be applied to assemblies comprising a tubular fabric for connecting two ends of a steel cord with a solder connecting the two ends of the tubular fabric and the exterior filaments of the steel cord.

## Claims

1. An assembly (20, 30) of two cords (14) and a tubular fabric in the form of a chinese finger (200) for connecting said cords (14), said tubular fabric (200) positioned so that it at least partially overlaps with the two non-overlapping cords (14), **characterized in that** said cords are steel cords and **in that** only the two ends (14) of said tubular fabric (200) are connected to the exterior filaments of the steel cords by means of a solder.

2. An assembly (20, 30) according to claim 1, wherein said solder comprises any metal with a melting point lower than that of steel.

3. An assembly (20, 30) according to claim 2, wherein said solder comprises tin-lead alloys.

4. An assembly (20, 30) according to claim 3, wherein said tin-lead alloys comprise a composition of 60% Sn and 40% Pb by weight.

5. An assembly (20, 30) according to claim 3, wherein said tin-lead alloys comprise a composition of 63% Sn and 37% Pb by weight.

6. An assembly (20, 30) according to claim 2, wherein said solder comprises a lead free solder type.

7. An assembly (20, 30) according to claim 6, wherein said lead free solder may comprise a composition of tin, copper, silver, bismuth, indium, zinc, antimony.

8. An assembly (20, 30) according to any one of the previous claims, wherein filaments of each connecting end may be heated and over-twisted together.

9. A method of connecting two steel cord (14) at two non-overlapping connecting ends by means of a tubular fabric in the form of a chinese finger (200), said method comprising the steps:
- connecting the two non-overlapping connecting ends by means of a tubular fabric (200);
- soldering only the two ends of the tubular fabric (200) to the exterior filaments of the steel cords (14).

10. A method according to claim 9, said method comprising the step:
- wrapping the connected assembly (20, 30) by means of a wrapping filament (24) thereby avoiding to wrap on top of the tubular fabric (200).

## Patentansprüche

1. Anordnung (20, 30) von zwei Cordseilen (14) und einem Schlauchgewebe in Form eines Seilstrumpfes (200) zum Verbinden der Cordseile (14), wobei das Schlauchgewebe (200) derart angeordnet ist, dass es sich mindestens teilweise mit den zwei nicht überlappenden Cordseilen (14) überlappt, **dadurch gekennzeichnet, dass** die Cordseile Stahlcordseile sind und dadurch, dass nur die zwei Enden (14) des Schlauchgewebes (200) mit den äußeren Filamenten der Stahlcordseile mittels eines Lötmittels verbunden sind.

2. Anordnung (20, 30) nach Anspruch 1, wobei das Lötmittel ein beliebiges Metall mit einem Schmelzpunkt umfasst, der niedriger als derjenige von Stahl ist.

3. Anordnung (20, 30) nach Anspruch 2, wobei das Lötmittel Zinn-Blei-Legierungen umfasst.

4. Anordnung (20, 30) nach Anspruch 3, wobei die Zinn-Blei-Legierungen eine Zusammensetzung von 60 Gew.-% Sn und 40 Gew.-% Pb umfassen.

5. Anordnung (20, 30) nach Anspruch 3, wobei die Zinn-Blei-Legierungen eine Zusammensetzung von 63 Gew.-% Sn und 37 Gew.-% Pb umfassen.

6. Anordnung (20, 30) nach Anspruch 2, wobei das Lötmittel einen bleifreien Lötmitteltyp umfasst.

7. Anordnung (20, 30) nach Anspruch 6, wobei das bleifreie Lötmittel eine Zusammensetzung von Zinn, Kupfer, Silber, Bismut, Indium, Zink und Antimon umfassen kann.

8. Anordnung (20, 30) nach einem der vorhergehenden Ansprüche, wobei Filamente jedes Verbindungsendes erwärmt und miteinander verdreht werden können.

9. Verfahren zum Verbinden von zwei Stahlcordseilen (14) an zwei nicht überlappenden Verbindungsenden mittels eines Schlauchgewebes (200) in Form eines Seilstrumpfes, wobei das Verfahren die folgenden Schritte umfasst:
- Verbinden der zwei nicht überlappenden Enden mittels eines Schlauchgewebes (200);
- Löten nur der zwei Enden des Schlauchgewebes (200) an die äußeren Filamente der Stahlcordseile (14).

10. Verfahren nach Anspruch 9, wobei das Verfahren den folgenden Schritt umfasst:
- Umwickeln der verbundenen Anordnung (20, 30) mittels eines Umwicklungsfilaments (24), sodass eine Umwicklung auf der Oberseite des Schlauchgewebes (200) vermieden wird.

## Revendications

1. Ensemble (20, 30) de deux câbles (14) et d'un tissu tubulaire sous la forme d'une chaussette de tirage (200) pour connecter lesdits câbles (14), ledit tissu tubulaire (200) étant positionné de telle sorte qu'il chevauche au moins partiellement les deux câbles non superposés (14), **caractérisé en ce que** lesdits câbles sont des câbles d'acier, et **en ce que** seules les deux extrémités (14) dudit tissu tubulaire (200) sont connectées aux filaments extérieurs des câbles d'acier au moyen d'une brasure.

2. Ensemble (20, 30) selon la revendication 1, dans lequel ladite brasure comprend n'importe quel métal dont le point de fusion est inférieur à celui de l'acier.

3. Ensemble (20, 30) selon la revendication 2, dans lequel ladite brasure comprend des alliages d'étain et de plomb.

4. Ensemble (20, 30) selon la revendication 3, dans lequel lesdits alliages d'étain et de plomb comprennent une composition de 60 % en poids de Sn et de 40 % en poids de Pb.

5. Ensemble (20, 30) selon la revendication 3, dans lequel lesdits alliages d'étain et de plomb comprennent une composition de 63 % en poids de Sn et de 37 % en poids de Pb.

6. Ensemble (20, 30) selon la revendication 2, dans lequel ladite brasure comprend un type de brasure exempt de plomb.

7. Ensemble (20, 30) selon la revendication 6, dans lequel ladite brasure exempte de plomb peut comprendre une composition d'étain, de cuivre, d'argent, de bismuth, d'indium, de zinc ou d'antimoine.

8. Ensemble (20, 30) selon l'une quelconque des revendications précédentes, dans lequel les filaments de chaque extrémité de connexion peuvent être chauffés et sur-torsadés les uns avec les autres.

9. Procédé de connexion de deux câbles d' acier (14) à des extrémités de connexion non superposées au moyen d'un tissu tubulaire sous la forme d'une chaussette de tirage (200), ledit procédé comprenant les étapes suivantes:
- connecter les deux extrémités de connexion non superposées au moyen d'un tissu tubulaire (200); et
- braser seulement les deux extrémités du tissu tubulaire (200) sur les filaments extérieurs des câbles d' acier (14).

10. Procédé selon la revendication 9, ledit procédé comprenant l'étape suivante:
- guiper l'ensemble connecté (20, 30) au moyen d'un filament de guipage (24), évitant de ce fait de guiper au-dessus du tissu tubulaire (200).
